# EUROPEAN PATENT SPECIFICATION

(11) **EP 4 456 168 B1**
(45) Date of publication and mention of the grant of the patent: **21.10.2026**
(21) Application number: 22919457.6
(22) Date of filing: 14.01.2022
(51) Int. Cl.: H01M 4/13, H01M 4/04, H01M 10/0587, H01M 4/66, H01M 10/04, H01M 4/02, H01M 4/139, H01M 4/62, H01M 10/052

(54) **ELECTRODE ASSEMBLY, BATTERY CELL, BATTERY, DEVICE AND MANUFACTURING METHODE**
ELEKTRODENANORDNUNG, BATTERIEZELLE, BATTERIE, VORRICHTUNG UND HERSTELLUNGSMETHODE
ENSEMBLE ÉLECTRODE, ÉLÉMENT DE BATTERIE, BATTERIE, DISPOSITIF ET MÉTHODE DE FABRICATION

(43) Date of publication of application: 30.10.2024
(73) Proprietor: Contemporary Amperex Technology Co., Limited, Jiaocheng District Ningde Fujian 352100 (CN)
(72) Inventor: GAO, Yalun, Ningde, Fujian 352100 (CN); CHEN, Wei, Ningde, Fujian 352100 (CN)
(74) Representative: Gong, Jinping
(86) International application number: PCT/CN2022/072013
(87) International publication number: WO 2023/133799

(56) References cited:
- WO-A1-2017/104117
- WO-A1-2021/153441
- CN-A- 1 801 505
- CN-A- 101 621 123
- CN-A- 110 676 431
- CN-A- 110 943 197
- JP-A- 2009 181 833

## Description

### TECHNICAL FIELD

The present application relates to the technical field of batteries, the invention defining an electrode assembly as specified in any of claims 1-10, a battery cell as specified in claim 11, a battery as specified in claim 12, a device as specified in claim 13, and a method for manufacturing an electrode assembly as specified in claim 14.

### BACKGROUND ART

Secondary batteries include electrode assemblies. At present, the secondary batteries have been widely used in electronic devices, such as mobile phones and notebook computers, due to their advantages of high energy density, environmental friendliness, etc. With the vigorous development of new energy technology, the applications of the secondary batteries have been rapidly expanded to fuel-electric hybrid vehicles, electric vehicles, and energy storage systems.

During the manufacturing of the electrode assemblies, bends of inner turns of the electrode assemblies are likely to break. CN1801505A and JP2009181833A both disclose a wound electrode group structure of storage battery where the density or thickness in the coiling direction of the electrode group is different, the density of group's core placement of the electrode is low or the thickness is thin.

### SUMMARY

The present application provides an electrode assembly, a battery cell, a battery, a device, and a manufacturing apparatus, in order to take into account a phenomenon of breakage of an inner turn of the electrode assembly and the requirements for increasing the energy density of the electrode assembly.

Embodiments of the present invention provide an electrode assembly, including a first electrode plate assembly and a second electrode plate assembly; wherein the first electrode plate assembly includes a first electrode plate and second electrode plate; the toughness of the first electrode plate is greater than the toughness of the second electrode plate; the first electrode plate is located upstream of the second electrode plate in a winding direction; a tail portion of the first electrode plate is adjacent to a head portion of the second electrode plate; and the second electrode plate assembly is wound together with the first electrode plate and the second electrode plate in the winding direction.

According to the above technical solution, the structure of the first electrode plate assembly of the electrode assembly is changed such that the first electrode plate assembly includes the first electrode plate and the second electrode plate different in toughness, the toughness of the first electrode plate being greater than the toughness of the second electrode plate. After winding, a corner of an inner turn of the electrode assembly has a greater bending degree compared with a corner of an outer turn thereof, electrode plates different in toughness are used with regard to the bending degrees of the corners at different positions, and the toughness of the first electrode plate located at the inner turn is greater than the toughness of the second electrode plate located at the outer turn, so that the first electrode plate is less likely to break in a bent region, that is, at the corner, during winding. In addition, the second electrode plate and the first electrode plate are relatively independent, so that the second electrode plate can use a structure having an energy density greater than that of the first electrode plate. As a result, the requirements of the electrode assembly for having a high energy density and being less likely to break at a corner are taken into account.

In some embodiments, the compacted density of the first electrode plate is less than the compacted density of the second electrode plate.

According to the above technical solution, by setting the compacted density of the first electrode plate to be less than the compacted density of the second electrode plate, the toughness of the first electrode plate is greater than the toughness of the second electrode plate, and the requirements of the electrode assembly for having a high energy density and being less likely to break at a corner are taken into account.

In some embodiments, the ratio of the compacted density of the second electrode plate to the compacted density of the first electrode plate is greater than 1 and less than or equal to 3.

According to the above technical solution, by setting the relationship between the compacted density of the second electrode plate and the compacted density of the first electrode plate, the toughness of the first electrode plate is greater than the toughness of the second electrode plate, and this way incorporates the respective characteristics of the first electrode plate and the second electrode plate, so that the requirements of the electrode assembly for having a high energy density and being less likely to break at a corner are taken into account.

In some embodiments, the ratio of the compacted density of the second electrode plate to the compacted density of the first electrode plate is 1.009-1.152.

According to the technical solutions provided in the embodiments of the present application a range of the ratio of the compacted density of the second electrode plate to the compacted density of the first electrode plate is specifically set. If the ratio of the compacted density of the second electrode plate to the compacted density of the first electrode plate is less than 1.009, the energy density gain is too low; and if the ratio of the compacted density of the second electrode plate to the compacted density of the first electrode plate is greater than 1.152, there is a too large difference between the compacted densities of the two positive electrode plates, which is likely to cause the problem of dynamic mismatch. By using the above ratio range, no potential quality hazards are brought about to the electrode assembly, and the energy density of the electrode assembly is also increased. Moreover, a manufacturing method is simple and makes it easy to achieve mass production, so that the phenomenon of breakage at the corner of the inner turn is less likely to occur during winding and hot pressing of the positive electrode plates and the use of the electrode assembly.

In some embodiments, the area density of the first electrode plate is less than the area density of the second electrode plate.

According to the above technical solution, the toughness of the first electrode plate is greater than the toughness of the second electrode plate by using a smaller area density, so that the first electrode plate is less likely to break or other undesirable phenomena at the corner due to bending in the process of forming the electrode assembly.

In some embodiments, the thickness of an aluminum foil of the first electrode plate is greater than or equal to the thickness of an aluminum foil of the second electrode plate.

According to the above technical solution, by using the first electrode plate made of a thicker aluminum foil, the breakage is less likely to occur at the corner of the inner turn of the electrode assembly during the winding, hot pressing and use; and the energy density of the electrode assembly is increased by using the second electrode plate made of a thinner aluminum foil.

In some embodiments, the thickness of the aluminum foil of the first electrode plate is 10-60 um, and/or the thickness of the aluminum foil of the second electrode plate is 5-15 um.

According to the above technical solution, by reasonably setting the respective thicknesses of the aluminum foils of the first electrode plate and the second electrode plate, the respective performance advantages of the first electrode plate and the second electrode plate can both be brought into play, and the requirements of the electrode assembly for being less likely to break at the corner of the inner turn and having a high energy density are taken into account.

In some embodiments, the thickness of the aluminum foil of the first electrode plate is 13-15 um, and/or the thickness of the aluminum foil of the second electrode plate is 8-13 um.

The above technical solution further provides the numerical value ranges of the thickness of the aluminum foils of the first electrode plate and the second electrode plate, so that the respective performance advantages of the first electrode plate and the second electrode plate can be brought into full play, and the requirements of the electrode assembly for being less likely to break at the corner of the inner turn and having a high energy density are taken into account.

In some embodiments, a slurry for the first electrode plate includes a softening agent.

According to the above technical solution, the toughness of the first electrode plate is increased by adding the softening agent to the slurry for the first electrode plate, so that the first electrode plate meets the hot pressing requirement and is less likely to break at the corner during use. Since the first electrode plate and the second electrode plate have respective independent structures and are machined and manufactured separately, the second electrode plate may use an existing structure having the highest energy density to take into account the requirements for being less likely to break at a corner and having a high energy density.

In some embodiments, the number of winding turns of the first electrode plate is 1-10.

The aforementioned numerical value range is used as the number of winding turns of the first electrode plate, so that the phenomenon of breakage at the corner of the inner turn of the first electrode plate assembly is reduced or even eliminated, and the first electrode plate also has a relatively high energy density.

In some embodiments, a separation distance between the tail portion of the first electrode plate and the head portion of the second electrode plate is 0-50 mm.

With the above technical solution, the difficulty of machining and manufacturing is reduced. Moreover, since the tail portion of the first electrode plate does not overlap with the head portion of the second electrode plate, the first electrode plate assembly is not damaged due to the overlap between the two portions, no overlap indentations are generated, and thus the first electrode plate assembly, the second electrode plate assembly and a separator are protected. Furthermore, by using the aforementioned numerical value range, the energy density of the electrode assembly is almost not decreased, and it is ensured that the electrode assembly still has a relatively high energy density.

In some embodiments, the separation distance a between the tail portion of the first electrode plate and the head portion of the second electrode plate is 3-10 mm.

The separation distance a uses the aforementioned numerical value range, so that the machining and manufacturing requirements and the energy density requirement are better taken into account, and the electrode assembly is convenient to machine and manufacture and also has a relatively high energy density.

In some embodiments, at least one of the tail portion of the first electrode plate and the head portion of the second electrode plate is located in a bent region of the electrode assembly; and/or at least one of the head portion of the tail portion of the first electrode plate and the second electrode plate is located in a flat region of the electrode assembly.

The tail portion of the first electrode plate and the head portion of the second electrode plate are both disposed in the bent region of the electrode assembly, so that indentations can be prevented from being formed in the flat region of the electrode assembly during the hot pressing. The tail portion of the first electrode plate and the head portion of the second electrode plate are both disposed in the flat region of the electrode assembly, so that the tail portion of the first electrode plate and the head portion of the second electrode plate can be better restrained, which is less likely to cause that an end surface of the aluminum foil damages the separator corresponding to a protruding surface.

In some embodiments, the electrode assembly further includes at least one third positive electrode plate, the third positive electrode plate being located downstream of the second electrode plate in the winding direction.

In some embodiments, the toughness of the third positive electrode plate is less than the toughness of the second electrode plate.

According to the above technical solution, the properties of the second electrode plate and the third positive electrode plate may be set differently according to needs to meet the richer functional requirements of the electrode assembly.

After the electrode plate assembly is wound, the corner of the inner turn of the electrode assembly has a greater bending degree compared with the corner of the outer turn thereof. According to the above technical solution, the electrode plates different in toughness are used with regard to the bending degrees of the corners at different positions, and the toughness of the first electrode plate located at the inner turn is greater than the toughness of the second electrode plate located at the outer turn. The toughness of the first electrode plate is greater than the toughness of the second electrode plate, so that the first electrode plate is less likely to break in the bent region, that is, at the corner, during winding. In addition, the second electrode plate and the first electrode plate are relatively independent, so that the second electrode plate can use a structure having an energy density greater than that of the first electrode plate. As a result, the requirements of the electrode assembly for having a high energy density and being less likely to break at a corner are taken into account.

The embodiments of the present invention further provide a battery cell, including an electrode assembly provided in any one of the technical solutions of the present invention.

The battery cell provided in the above technical solution also has the advantages described above because the battery cell has the electrode assembly described above.

The embodiments of the present invention further provide a battery, including a battery cell provided in any one of the technical solutions of the present invention.

The battery cell provided in the above technical solution also has the advantages described above because the battery cell has the battery described above, which includes the electrode assembly.

The embodiments of the present invention further provide a device using a battery, the device including a battery provided in any one of the technical solutions of the present invention.

The device provided in the above technical solution also has the advantages described above because the device has the electrode assembly described above.

In a non-claimed embodiments, the embodiments of the present invention further provide an apparatus for manufacturing an electrode assembly, the apparatus including a first supply component, a second supply component and a third supply component; wherein the first supply component is configured to provide a first electrode plate to be wound; the second supply component is configured to provide a second electrode plate to be wound; and the third supply component is configured to provide a second electrode plate assembly to be wound.

The above technical solutions implement the manufacture of the electrode assembly provided by the embodiments of the present invention, and the obtained electrode assembly has the beneficial effects described above.

The embodiments of the present invention provide a method for manufacturing an electrode assembly, the method including steps of: winding, in a winding direction, a first electrode plate and a second electrode plate assembly that are arranged in a stack; disposing a head portion of a second electrode plate downstream of a tail portion of the first electrode plate; and continuing to wind the second electrode plate and the second electrode plate assembly in the winding direction to obtain the electrode assembly.

The aforementioned numerical value range is used as the number of winding turns of the first electrode plate, so that the phenomenon of breakage at the corner of the inner turn of the first electrode plate assembly is reduced or even eliminated, and the first electrode plate also has a relatively high energy density. Considering the manufacturing process of the electrode assembly, the separation distance between the tail portion of the first electrode plate and the head portion of the second electrode plate is set to be greater than 0. This will reduce the difficulty of machining and manufacturing. Moreover, since the tail portion of the first electrode plate does not overlap with the head portion of the second electrode plate, the first electrode plate assembly is not damaged due to the overlap between the two portions, no overlap indentations are generated, and thus the first electrode plate assembly, the second electrode plate assembly and the separator are protected.

### BRIEF DESCRIPTION OF THE DRAWINGS

To more clearly illustrate the technical solutions of the embodiments of the present invention, the accompanying drawings required in the embodiments of the present invention will be briefly described below. Obviously, the accompanying drawings described below are merely some embodiments of the present invention.
FIG. 1 is a schematic structural diagram of a device using a battery disclosed in some embodiments of the present application.
FIG. 2 is a schematic structural diagram of an electrode assembly disclosed in some embodiments of the present invention.
FIG. 3 is a schematic structural diagram of an electrode assembly disclosed in some other embodiments of the present invention.
FIG. 4 is a schematic structural diagram of an electrode assembly disclosed in still some other embodiments of the present invention.
FIG. 5 is a schematic structural diagram of an electrode assembly disclosed in some other embodiments of the present invention.
FIG. 6 is a schematic flow diagram of a method for manufacturing an electrode assembly disclosed in some embodiments of the present invention.

In the accompanying drawings, the figures are not drawn to scale.

List of reference signs:
1. First electrode plate assembly; 11. First electrode plate; 12. Second electrode plate; 13. Third positive electrode plate; 2. Second electrode plate assembly; 3. Separator; 100. Battery.

### DETAILED DESCRIPTION OF EMBODIMENTS

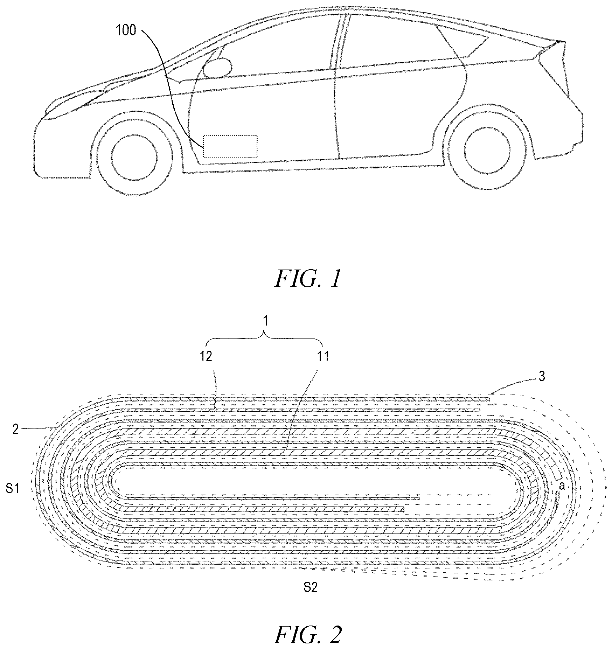

The implementations of the present application will be further described in detail below with reference to FIGS. 2 to 6 and embodiments. The following detailed description of the embodiments and the accompanying drawings are used to illustrate the principle of the present application exemplarily and are not intended to limit the scope of the present application.

In the description of the present application, it should be noted that "a plurality of" means two or more, unless otherwise specified. The orientation or position relationship indicated by the terms "top", "bottom", "upper", "lower", "left", "right", "inner", "outer", etc. is only for the convenience of describing the present application and simplifying the description, rather than indicating or implying that the device or element referred to must have a particular orientation or be constructed and operated in a particular orientation, and therefore should not be construed as a limitation on the present application. In addition, the terms "first", "second", "third", etc. are merely for descriptive purposes, and should not be construed as indicating or implying the relative importance. The term "perpendicular" does not mean being perpendicular in the strict sense, but within an allowable range of tolerance. The term "parallel" does not mean being parallel in the strict sense, but within an allowable range of tolerance.

During the winding and manufacturing of an electrode assembly, an electrode plate corresponding to a bent region of the innermost turn is likely to break. The inventors have found that in the related art, a solution in which the inner turn of the electrode plate is coated with no active substances is used in order to solve the phenomenon of breakage of the inner turn of the positive electrode plate. Although such a solution can solve the phenomenon of breakage of the inner turn of the electrode plate, the energy density of the electrode assembly is reduced, and the quality problem of a battery cell is also caused.

After extensive research, the inventors provide the following solutions, which not only make the inner turn of the electrode plate of the electrode assembly less likely to break, but also prevents the energy density of the electrode assembly from decreasing or even increases the energy density.

The embodiments of the present invention provide a device using a battery, the device including a battery provided in any one of the technical solutions of the present invention.

The device is, for example, a vehicle, a mobile phone, a portable apparatus, a notebook computer, a ship, a spacecraft, an electric toy, an electric tool, etc. The vehicle may be a fuel vehicle, a gas vehicle or a new-energy vehicle. The new-energy vehicle may be a battery electric vehicle, a hybrid vehicle, an extended-range vehicle, etc. The spacecraft includes an airplane, a rocket, an aerospace plane, a spaceship, etc. The electric toy includes a stationary or mobile electric toy, such as a game machine, an electric toy car, an electric toy ship, and an electric toy airplane. The electric tool includes a metal cutting electric tool, a grinding electric tool, an assembling power tool, and a railway power tool, such as an electric drill, an electric grinder, an electric wrench, an electric screwdriver, an electric hammer, an electric impact drill, a concrete vibrator, and an electric planer. The power consuming apparatuses described above are not specially limited in the embodiments of the present application.

For ease of description, an example in which the device is a vehicle is taken for description in the following embodiments.

Referring to FIG. 1, a battery 100 is disposed inside the vehicle, and the battery 100 is disposed at the bottom, the head or the tail of the vehicle. The battery 100 supplies power to the vehicle. For example, the battery 100 is used as a power source for operating the vehicle.

Since the device has an electrode assembly to be described below, the device also has various technical effects to be described below.

The embodiments of the present invention further provide a battery, including a battery cell provided in any one of the technical solutions of the present invention to be described below.

A battery pack is used as a power supply component to provide required electric energy to various electrical components of the device.

The battery includes a case and one or more battery cells disposed in the case. The battery cells are electrically connected to each other, for example, in series, in parallel or in series-parallel, to achieve required electrical performance parameters of the battery pack. The plurality of battery cells are disposed in rows, and one or more rows of battery cells may be disposed in the case as desired.

In some embodiments, the battery cells of the battery pack are arranged in a length direction of the case. A plurality of rows of battery cells are disposed in a width direction of the battery pack. One or more layers of battery cells may further be arranged in a height direction of the battery pack as desired.

Since the battery has an electrode assembly to be described below, the battery also has various technical effects to be described below.

The embodiments of the present invention further provide a battery cell, including the electrode assembly provided in any one of the technical solutions of the present invention.

The battery cell may include one or more electrode assemblies, and the electrical connection relationship of the electrode assemblies is, for example, series connection, parallel connection, or series-parallel connection.

Since the battery cell has the electrode assembly to be described below, the battery cell also has various technical effects to be described below.

The embodiments of the present application provide an electrode assembly, including a first electrode plate assembly 1 and a second electrode plate assembly 2. The first electrode plate assembly 1 includes a first electrode plate 11 and a second electrode plate 12. The toughness of the first electrode plate 11 is greater than the toughness of the second electrode plate 12; the first electrode plate 11 is located upstream of the second electrode plate 12 in a winding direction; and a tail portion of the first electrode plate 11 is adjacent to a head portion of the second electrode plate 12. The second electrode plate assembly 2 is wound together with the first electrode plate 11 and the second electrode plate 12 in the winding direction.

The electrode assembly is a constituent component of a secondary battery. During the charging/discharging of the battery, active ions are intercalated and de-intercalated back and forth between the first electrode plate assembly 1 and the second electrode plate assembly 2. An electrolyte functions to conduct ions between the first electrode plate assembly 1 and the second electrode plate assembly 2. The first electrode plate assembly 1 is specifically, for example, a positive electrode plate assembly, and the second electrode plate assembly 2 is specifically, for example, a negative electrode plate assembly. The second electrode plate assembly 2 may be a one-piece electrode plate, or may be a segmented structure similar to the first electrode plate assembly 1.

The first electrode plate 11 and the second electrode plate 12 of the first electrode plate assembly 1 each includes a substrate and a positive electrode film disposed on at least one surface of the substrate. As an example, the substrate has two surfaces opposite to each other in a thickness direction of the substrate, and the positive electrode film layer is disposed on either or both of the two surfaces of the substrate. The substrate is made of a material with good conductivity and mechanical strength, and functions for electrical conduction and current collection. For example, the substrate is made of an aluminum foil.

The positive electrode film includes a positive electrode active material. The positive electrode active material is an existing positive electrode active material for the secondary battery. Specifically, the positive electrode active material includes one or more of lithium cobaltate, lithium nickelate, lithium manganate, nickel lithium manganate, a ternary material, lithium iron phosphate, a lithium-rich material, layered lithium transition metal oxide, and a modified compound thereof. The modified compound means that these materials are subjected to doping modification and/or surface coating modification.

In some embodiments, the positive electrode active material includes one or more of: lithium cobalt oxide, lithium nickel cobalt manganese oxide, lithium manganese oxide, lithium nickel manganese oxide, lithium nickel oxide, lithium nickel cobalt oxide, lithium manganese cobalt oxide, lithium nickel cobalt aluminum oxide, and a modified compound thereof. Specifically, the positive electrode active material includes at least one of: layered lithium transition metal oxide, lithium-containing phosphates of an olivine structure, and a modified compound thereof.

In some embodiments, the positive electrode active material includes a high-nickel ternary positive electrode active material, and the electrode assembly using this material has a larger capacity per gram, that is, a higher energy density.

In some embodiments, the positive electrode film further includes a conductive agent. The conductive agent is specifically selected from one or more of: graphite, superconducting carbon, acetylene black, carbon black, Ketjen black, carbon dots, carbon nano tubes, graphene, and carbon nanofibers.

The number of first electrode plates 11 is, for example, one, two or more. The number of second electrode plates 12 is, for example, one, two or more. The length of the first electrode plate 11 is greater than the length of the second electrode plate 12, or the length of the first electrode plate 11 is equal to the length of the second electrode plate 12, or the length of the first electrode plate 11 is less than the length of the second electrode plate 12.

The length of the first electrode plate 11 herein refers to the length of the first electrode plate 11 in an unwound state, and the length of the second electrode plate 12 herein refers to the length of the second electrode plate 12 in an unwound state.

It should be noted that, in addition to the first electrode plate 11 and the second electrode plate 12, the first electrode plate assembly 1 of the electrode assembly may further include other positive electrode plates, which is not limited herein.

The first electrode plate 11 and the second electrode plate 12 of the electrode assembly are arranged in a flatly-laid manner. The tail portion of the first electrode plate 11 is adjacent to the head portion of the second electrode plate 12. The expression "adjacent" herein means that the tail portion of the first electrode plate 11 is not in contact with the head portion of the second electrode plate 12, and there is a set gap between the two portions; or the tail portion of the first electrode plate 11 is adjacent to the head portion of the second electrode plate 12, and the two portions are exactly in contact with each other with a separation distance of 0.

The second electrode plate assembly 2 and the first electrode plate assembly 1 are wound together to form a part of the electrode assembly, and the second electrode plate assembly 2 may be of an integral structure or a split structure. A limitation is given herein by taking an example of the second electrode plate assembly 2 being of an integral structure.

According to the above technical solution, the structure of the first electrode plate assembly 1 of the electrode assembly is changed such that the first electrode plate assembly includes the first electrode plate 11 and the second electrode plate 12 different in toughness, the toughness of the first electrode plate 11 is greater than the toughness of the second electrode plate 12, the first electrode plate 11 is located upstream of the second electrode plate 12 in the winding direction, that is, the first electrode plate 11 is closer to a winding starting point, and the winding degree of the first electrode plate 11 is more significant; and the second electrode plate 12 is closer to a winding end point, and the winding degree of the second electrode plate 12 is relatively less significant than the winding degree of the first electrode plate 11. The first electrode plate 11 has a greater toughness, which makes the first electrode plate 11 less likely to break at a bent region S1, that is, at a corner, during winding. In addition, the second electrode plate 12 and the first electrode plate 11 are relatively independent, so that the second electrode plate 12 can use a structure having an energy density greater than that of the first electrode plate 11. As a result, the requirements of the electrode assembly for having a high energy density and being less likely to break at a corner are taken into account.

In some embodiments, the compacted density of the first electrode plate 11 is less than the compacted density of the second electrode plate 12.

The first electrode plate 11 and the second electrode plate 12 each includes an aluminum foil and an attachment on the aluminum foil. The compacted density is based on a well-known concept known in the art. The compacted density of the first electrode plate 11 is less than the compacted density of the second electrode plate 12, such that the toughness of the first electrode plate 11 is greater than the toughness of the second electrode plate 12.

The compacted density of the first electrode plate 11 is less than the compacted density of the second electrode plate, and the compacted density of the first electrode plate 11 meets the requirements of hot pressing and the requirements for being less likely to break at a corner during use. The compacted density of the second electrode plate 12 is the highest compacted density that can be achieved by using the prior art.

According to the above technical solution, by setting the compacted density of the first electrode plate 11 to be less than the compacted density of the second electrode plate, the requirements of the electrode assembly for having a high energy density and being less likely to break at a corner are taken into account.

In some embodiments, the ratio of the compacted density of the second electrode plate 12 to the compacted density of the first electrode plate 11 is greater than 1 and less than or equal to 3.

The ratio of the compacted density of the second electrode plate 12 to the compacted density of the first electrode plate 11 is, for example, 1, 1.5, 2, 2.5, 3, etc.

The first electrode plate 11 and the second electrode plate 12 are different in compacted density, which means that the two electrode plates are different in toughness. The smaller the compacted density is, the larger the toughness is, and the larger the compacted density is, the higher the energy density is, so that in the process of forming the electrode assembly, the first electrode plate 11 is less likely to break or other undesirable phenomena due to bending, and the second electrode plate 12 ensures that the electrode assembly has a relatively high energy density.

For the electrode assembly made from a ternary material, the compacted density of the first electrode plate 11 is in the range of 3.0 g/cc-3.7 g/cc, and the compacted density of the second electrode plate 12 is in the range of 3.4 g/cc-4.0 g/cc. Specifically, the compacted density of the first electrode plate 11 is in the range of 3.3 g/cc-3.6 g/cc, and the compacted density of the second electrode plate 12 is in the range of 3.45 g/cc-3.7 g/cc.

For the electrode assembly made from a lithium iron phosphate material, the compacted density of the first electrode plate 11 is in the range of 2.0 g/cc-2.7 g/cc, and the compacted density of the second electrode plate 12 is in the range of 2.3 g/cc-2.8 g/cc. In particular, the compacted density of the first electrode plate 11 is in the range of 2.2 g/cc-2.6 g/cc, and the compacted density of the second electrode plate 12 is in the range of 2.4 g/cc-2.7 g/cc.

It should be noted that, the compacted density of the second electrode plate assembly 2 may also be set according to requirements, and a suitable compacted density contributes to protecting the integrity of a particle structure of a negative electrode active material, so as to improve the cohesion and adhesion of the second electrode plate assembly 2, reduce the expansion and side reactions during high-temperature cycling of the battery, and thus prolong the high-temperature cycling life of the battery.

According to the above technical solution, by setting the relationship between the compacted density of the second electrode plate 12 and the compacted density of the first electrode plate 11, the toughness of the first electrode plate 11 is greater than the toughness of the second electrode plate 12, and this way incorporates the respective characteristics of the first electrode plate 11 and the second electrode plate 12, so that the requirements of the electrode assembly for having a high energy density and being less likely to break at a corner are taken into account.

In some embodiments, the ratio of the compacted density of the second electrode plate 12 to the compacted density of the first electrode plate 11 is 1.009-1.152.

Specifically, the ratio of the compacted density of the second electrode plate 12 to the compacted density of the first electrode plate 11 is 1.009, 1.015, 1.10, 1.12, 1.152, etc. The ratio of the compacted density of the second electrode plate to the compacted density of the first electrode plate is in the range of 1.009-1.152. The first electrode plates 11 and the second electrode plates 12 used for the ternary material and the lithium iron phosphate need to have different compacted densities.

According to the technical solutions provided in the embodiments of the present application, the compacted density of the second electrode plate 12 and the compacted density of the first electrode plate 11 are specifically set. If the ratio of the compacted density of the second electrode plate 12 to the compacted density of the first electrode plate 11 is less than 1.009, the energy density gain is too low; and if the ratio of the compacted density of the second electrode plate 12 to the compacted density of the first electrode plate 11 is greater than 1.152, there is a too large difference between the compacted densities of the first electrode plate 11 and the second electrode plate 12, which is likely to cause the problem of dynamic mismatch. By using the above numerical values, no potential quality hazards are brought about to the electrode assembly, and the energy density of the electrode assembly is also increased. Moreover, a manufacturing method is simple and makes it easy to achieve mass production, so that the phenomenon of breakage at the corner of the inner turn is less likely to occur during winding and hot pressing of the positive electrode plates and the use of the electrode assembly.

In some embodiments, the area density of the first electrode plate 11 is less than the area density of the second electrode plate 12.

The area density herein refers to the mass of an electrode plate coating per unit area. When two first electrode plate 11 are made from the same material, they having different area densities means that the first electrode plates 11 have different toughnesses, and the smaller the area density is, the greater the toughness is. On the contrary, if the area density is larger, the toughness is smaller. With regard to the area density of the second electrode plate 12, an existing material having the largest area density may be used to increase the energy density.

According to the above technical solution, the toughness of the first electrode plate 11 is greater than the toughness of the second electrode plate 12 by using a smaller area density, so that the first electrode plate 11 is less likely to break or other undesirable phenomena at the corner due to bending in the process of forming the electrode assembly.

In some embodiments, the thickness of the aluminum foil of the first electrode plate 11 is greater than or equal to the thickness of the aluminum foil of the second electrode plate 12.

The thickness of the aluminum foil of the first electrode plate 11 is greater than the thickness of the aluminum foil of the second electrode plate 12, such that the first electrode plate 11 is less likely to break during the winding.

According to the above technical solution, by using the first electrode plate 11 made of a thicker aluminum foil, the breakage is less likely to occur at the corner of the inner turn of the electrode assembly during the winding, hot pressing and use; and the energy density of the electrode assembly is increased by using the second electrode plate 12 made of a thinner aluminum foil.

In some embodiments, the thickness of the aluminum foil of the first electrode plate 11 is 10 um-60 um; and/or the thickness of the aluminum foil of the second electrode plate 12 is 5 um-15 um.

Specifically, the thickness of the aluminum foil of the first electrode plate 11 is, for example, 10 um, 20 um, 30 um, 40 um, 50 um, or 60 um. The thickness of the aluminum foil of the second electrode plate 12 is, for example, 5 um, 7 um, 9 um, 11 um, 13 um, or 15 um. When the respective thickness parameters of the first electrode plate 11 and the second electrode plate 12 are set, the thickness of the aluminum foil of the first electrode plate 11 is greater than the thickness of the aluminum foil of the second electrode plate 12.

According to the above technical solution, by reasonably setting the respective thicknesses of the aluminum foils of the first electrode plate 11 and the second electrode plate 12, the respective performance advantages of the first electrode plate 11 and the second electrode plate 12 can both be brought into play, and the requirements of the electrode assembly for being less likely to break at the corner of the inner turn and having a high energy density are taken into account.

In some embodiments, the thickness of the aluminum foil of the first electrode plate 11 is 13 um-15 um; and/or the thickness of the aluminum foil of the second electrode plate 12 is 8 um-13 um.

The thickness of the aluminum foil of the first electrode plate 11 is 13 um, 14 um, or 15 um. The thickness of the aluminum foil of the second electrode plate 12 is specifically, for example, 8 um, 9 um, 10 um, 12 um, or 13 um. Considering the thickness, the aluminum foil of the second electrode plate 12 uses, for example, an existing thinnest base material. When the respective thicknesses of the aluminum foils of the first electrode plate 11 and the second electrode plate 12 are set, the thickness of the aluminum foil of the first electrode plate 11 is greater than or equal to the thickness of the aluminum foil of the second electrode plate 12.

The above technical solution further provides the numerical value ranges of the thickness of the aluminum foils of the first electrode plate 11 and the second electrode plate 12, so that the respective performance advantages of the first electrode plate 11 and the second electrode plate 12 can be brought into full play, and the requirements of the electrode assembly for being less likely to break at the corner of the inner turn and having a high energy density are taken into account.

In some embodiments, a slurry for the first electrode plate 11 includes a softening agent.

The softening agent contains alcohol, ester, ether, benzene ring, liquid polysulfide rubber, liquid acrylate rubber, liquid polybutadiene rubber, nitrile rubber, ethylene-propylene rubber and styrene-butadiene rubber, polyurethane, styrene, polyolefin, polyester, 1,2-polybutadiene and polyamide, low molecular polyamide, a low molecular inactive toughening agent, etc.

According to the above technical solution, the toughness of the first electrode plate 11 is increased by adding the softening agent to the slurry for the first electrode plate 11, so that the first electrode plate meets the hot pressing requirement and is less likely to break at the corner during use. Since the first electrode plate 11 and the second electrode plate 12 have respective independent structures and are machined and manufactured separately, the second electrode plate 12 may use an existing structure having the highest energy density to take into account the requirements for being less likely to break at a corner and having a high energy density.

In some embodiments, the number of winding turns of the first electrode plate 11 is 1-10.

The number of winding turns may be 1, 2, 3, 4, 5, 6, 8, or may be 1.5, 3.5, etc. Taking an inner end point of the first electrode plate 11 as the starting point, winding by 360° in the winding direction is regarded as one turn.

The aforementioned numerical value range is used as the number of winding turns of the first electrode plate 11, so that the phenomenon of breakage at the corner of the inner turn of the first electrode plate assembly 1 is reduced or even eliminated, and the first electrode plate 11 also has a relatively high energy density.

In some embodiments, a separation distance a between the tail portion of the first electrode plate 11 and the head portion of the second electrode plate 12 is 0-50 mm.

The separation distance a between the tail portion of the first electrode plate 11 and the head portion of the second electrode plate 12 refers to a distance between the two portions in the winding direction. That is, assuming there is an electrode plate here, the distance is the length of the electrode plate. Specifically, the separation distance a is 0, that is, the tail portion of the first electrode plate 11 and the head portion of the second electrode plate 12 are exactly in contact with each other and do not overlap with each other, so that the energy density of the electrode assembly is higher. The separation distance a between the tail portion of the first electrode plate 11 and the head portion of the second electrode plate 12 is specifically, for example, 5 mm, 10 mm, 25 mm, 40 mm, 50 mm, etc.

The tail portion of the first electrode plate 11 may be located in the bent region S1 of the electrode assembly, or in a flat region S2 of the electrode assembly. The head portion of the second electrode plate 12 is adjacent to the tail portion of the first electrode plate 11, and the two portions may be adjacent to each other in the bent region S1 of the electrode assembly, or in the flat region S2 of the electrode assembly. Considering the manufacturing process of the electrode assembly, the separation distance a between the tail portion of the first electrode plate 11 and the head portion of the second electrode plate 12 is greater than 0. This will reduce the difficulty of machining and manufacturing. Moreover, since the tail portion of the first electrode plate 11 does not overlap with the head portion of the second electrode plate 12, the first electrode plate assembly 1 is not damaged due to the overlap between the two portions, no overlap indentations are generated, and thus the first electrode plate assembly 1, the second electrode plate assembly 2 and the separator 3 are protected. Furthermore, by using the aforementioned numerical values, the energy density of the electrode assembly is almost not decreased or even may be increased, and it is ensured that the electrode assembly still has a relatively high energy density.

In some embodiments, the separation distance a between the tail portion of the first electrode plate 11 and the head portion of the second electrode plate 12 is 3 mm-10 mm.

Specifically, the separation distance is, for example, 3 mm, 5 mm, 7 mm, 8 mm, 9 mm, 10 mm, etc.

The separation distance a uses the aforementioned numerical value range, so that the machining and manufacturing requirements and the energy density requirement are better taken into account, and the electrode assembly is convenient to machine and manufacture and also has a relatively high energy density.

In some embodiments, at least one of the tail portion of the first electrode plate 11 and the head portion of the second electrode plate 12 is located in the bent region S1 of the electrode assembly; and/or at least one of the tail portion of the first electrode plate 11 and the head portion of the second electrode plate 12 is located in the flat region S2 of the electrode assembly.

According to one implementation, the tail portion of the first electrode plate 11 and the head portion of the second electrode plate 12 are both located in the bent region S1 of the electrode assembly. Since there is a hot pressing step in the manufacturing process of the electrode assembly, the tail portion of the first electrode plate 11 and the head portion of the second electrode plate 12 are both disposed in the bent region S1 of the electrode assembly, so that indentations can be prevented from being formed in the flat region S2 of the electrode assembly during the hot pressing.

According to another implementation, the tail portion of the first electrode plate 11 and the head portion of the second electrode plate 12 are both located in the flat region S2 of the electrode assembly. Since there is the hot pressing step in the manufacturing process of the electrode assembly, the tail portion of the first electrode plate 11 and the head portion of the second electrode plate 12 are both disposed in the flat region S2 of the electrode assembly, so that the tail portion of the first electrode plate 11 and the head portion of the second electrode plate 12 can be better restrained, which is less likely to cause that an end surface of the aluminum foil damages the separator corresponding to a protruding surface.

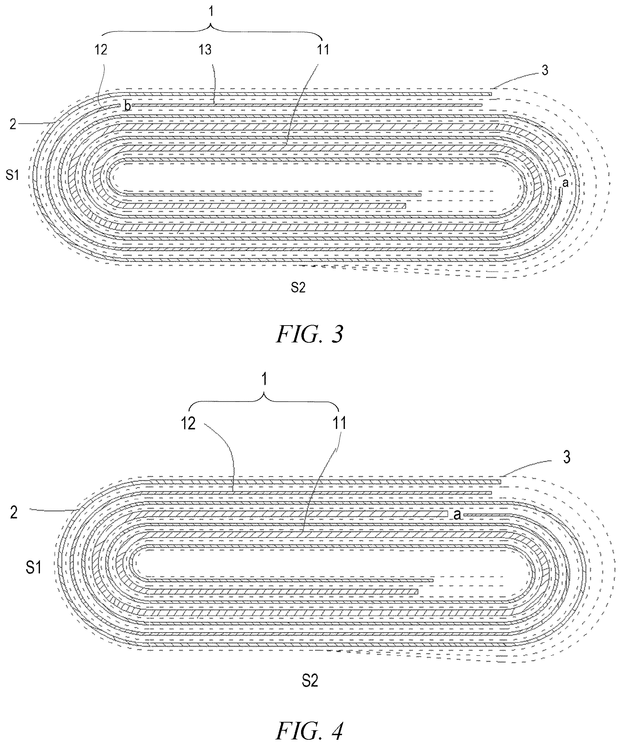

Referring to FIG. 3, in some embodiments, the electrode assembly further includes a third positive electrode plate 13. The number of third positive electrode plates 13 is at least one, and the third positive electrode plate 13 is located downstream of the second electrode plate 12 in the winding direction.

The separation distance between a head portion of the third positive electrode plate 13 and a tail portion of the second electrode plate 12 is represented by b. b is 0-50 mm, for example, 5 mm, 10 mm, 25 mm, 40 mm, 50 mm, etc. Comparing the second electrode plate 12 with the third positive electrode plate 13, the third positive electrode plate 13 is closer to the winding end point, and the second electrode plate 12 is closer to the winding starting point. In an unwound state, the length of the third positive electrode plate 13 may be greater than, less than, or equal to the length of the second electrode plate 12.

According to the above technical solution, the properties of the second electrode plate 12 and the third positive electrode plate 13 may be set differently according to needs to meet the richer functional requirements of the electrode assembly.

In some embodiments, the toughness of the third positive electrode plate 13 is less than the toughness of the second electrode plate 12.

How to make the toughness of the first electrode plate 11 greater than the toughness of the second electrode plate 12 is described above in detail. Similarly, the toughness of the third positive electrode plate 13 can also be made less than the toughness of the second electrode plate 12 by setting the area density, the compacted density, the thickness of the aluminum foil, etc.

Since the third positive electrode plate 13 is closer to the winding end point and the bending degree of the third positive electrode plate 13 is smaller, the toughness of the third positive electrode plate 13 may be less than the toughness of the second electrode plate 12 to further increase the energy density of the electrode assembly.

It should be noted that the contents of the first electrode plate 11 and the second electrode plate 12 being different in area density, compacted density and thickness of the aluminum foil are described in the above embodiments, and these contents can be arbitrarily combined with each other without causing contradictions. For example, in an embodiment, the thickness of the aluminum foil of the first electrode plate 11 is made greater than the thickness of the aluminum foil of the second electrode plate 12, and the compacted density of the first electrode plate 11 is also made less than the compacted density of the second electrode plate 12.

In some embodiments, the electrode assembly further includes the separator 3. The electrode assembly is formed by winding the first electrode plate assembly 1, the second electrode plate assembly 2, and the separator 3. After the first electrode plate assembly 1, the second electrode plate assembly 2 and the separator 3 are wound, the electrode assembly has the bent region S1 and the flat region S2, and the bent region S1 is connected to the flat region S2.

When the battery cell is being charged, lithium ions are de-intercalated from the first electrode plate assembly, and then are intercalated into a negative electrode through the separator. The separator 3 has an electronic insulation property and is configured to separate the first electrode plate assembly 1 and the second electrode plate assembly 2 that are adjacent to each other, so as to prevent the adjacent first electrode plate assembly 1 and second electrode plate assembly 2 from being shortcircuited. The separator 3 has a large number of through micro-pores, so that the separator can ensure the free passage of electrolyte ions and has a good permeability to the lithium ions.

Some specific embodiments will be described below.

Referring to FIG. 3, in some embodiments, the positive electrode plate assembly 1 of the electrode assembly uses a segmented design, and a main material of the first electrode plate 11 is an NCM811 material. The NCM811 is a relatively cutting-edge developed material for ternary lithium batteries. NCM indicates the main components thereof, i.e., nickel (Ni), cobalt (Co) and manganese (Mn), and 811 indicates that the proportion of the three components is 0.8 : 0.1 : 0.1. The number of winding turns of the first electrode plate 11 is 3, and the area density of the first electrode plate 11 is 0.285 g/m². The compacted density of the first electrode plate 11 is 3.45 g/cc, and the thickness of the aluminum foil of the first electrode plate 11 is 15 um. The area density of the second electrode plate 12 is 0.285 g/m², the compacted density is 3.6 g/cc, and the thickness of the aluminum foil of the second electrode plate 12 is 10 um. During winding, the separation distance between the tail portion of the first electrode plate 11 and the head portion of the second electrode plate 12 is 3 mm, and the adjacent positions thereof are located in the bent region S1 of the electrode assembly. In the above embodiments, the compacted density of the first electrode plate 11 is less than the compacted density of the second electrode plate 12, and the thickness of the aluminum foil of the first electrode plate 11 is greater than the thickness of the aluminum foil of the second electrode plate 12, so that the toughness of the first electrode plate 11 is greater.

In some other embodiments, the positive electrode plate assembly 1 of the electrode assembly uses the segmented design, and the main material of the first electrode plate 11 is the NCM811 material. The number of winding turns of the first electrode plate is 3, the area density of the first electrode plate is 0.285 g/m², the compacted density of the first electrode plate is 3.5 g/cc, the thickness of the aluminum foil of the first electrode plate is 13 um, and an ester-type silane softening agent is added to the slurry for the first electrode plate. The area density of the second electrode plate 12 is 0.285 g/m², the compacted density of the second electrode plate 12 is 3.5 g/cc, and the thickness of the aluminum foil of the second electrode plate 12 is 13 um. During winding, a distance of a connection strip between the first electrode plate 11 and the second electrode plate 12 is 3 mm, that is, the separation distance between the tail portion of the first electrode plate 11 and the head portion of the second electrode plate 12 is 3 mm. The connection strip is located at the corner. In the above embodiments, the first electrode plate 11 contains the softening agent, so that the toughness of the first electrode plate 11 is greater.

In some other embodiments, the positive electrode plate assembly 1 of the electrode assembly uses a segmented design, and the main material of the positive electrode is the NCM811 material. The number of winding turns of the first electrode plate 11 is 3, the area density of the first electrode plate 11 is 0.255 g/m², the compacted density of the first electrode plate 11 is 3.5 g/cc, and the thickness of the aluminum foil of the first electrode plate 11 is 13 um. The area density of the second electrode plate 12 is 0.285 g/m², the compacted density of the second electrode plate 12 is 3.5 g/cc, and the thickness of the aluminum foil of the second electrode plate 12 is 13 um. During winding, the distance of the connection strip between the first electrode plate 11 and the second electrode plate 12 is 3 mm, and the connection strip is located at the corner. In the above embodiments, the area density of the first electrode plate 11 is less than the area density of the second electrode plate 12, so that the toughness of the first electrode plate 11 is greater.

Referring to FIG. 4, in some other embodiments, the positive electrode plate assembly 1 of the electrode assembly uses a segmented design, and the main material of the positive electrode is the NCM811 material. The number of winding turns of the first electrode plate 11 is 3, the area density of the first electrode plate 11 is 0.285 g/m², the compacted density of the first electrode plate 11 is 3.45 g/cc, and the thickness of the aluminum foil of the first electrode plate 11 is 15 um. The area density of the second electrode plate 12 is 0.285 g/m², the compacted density of the second electrode plate 12 is 3.6 g/cc, and the thickness of the aluminum foil of the second electrode plate 12 is 10 um. During winding, the distance of the connection strip between the first electrode plate 11 and the second electrode plate 12 is 3 mm, and the connection strip is located at a large surface. In the above embodiments, the compacted density of the first electrode plate 11 is less than the compacted density of the second electrode plate 12, and the thickness of the aluminum foil of the first electrode plate 11 is greater than the thickness of the aluminum foil of the second electrode plate 12, so that the toughness of the first electrode plate 11 is greater. Moreover, the adjacent positions of the first electrode plate 11 and the second electrode plate 12 are located in the flat region S2, so that the tail portion of the first electrode plate 11 and the head portion of the second electrode plate 12 can be better restrained, which is less likely to cause that the end surface of the aluminum foil damages the separator 3 corresponding to the protruding surface.

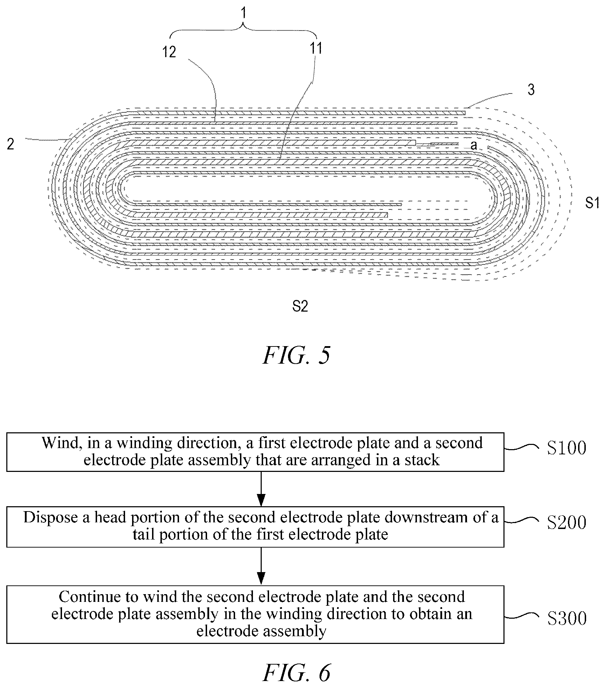

Referring to FIG. 5, in some other embodiments, the first electrode plate assembly 1 of the electrode assembly uses a segmented design, and the main material of the positive electrode is the NCM811 material. The number of winding turns of the first electrode plate 11 is 3, the area density of the first electrode plate 11 is 0.285 g/m², the compacted density of the first electrode plate 11 is 3.45 g/cc, and the thickness of the aluminum foil of the first electrode plate 11 is 15 um. The area density of the second electrode plate 12 is 0.285 g/m², the compacted density of the second electrode plate 12 is 3.6 g/cc, and the thickness of the aluminum foil of the second electrode plate 12 is 10 um. During winding, the distance of the connection strip between the first electrode plate 11 and the second electrode plate 12 is 10 mm, and the connection strip is located at the corner.

The embodiments of the present application further provide an apparatus for manufacturing an electrode assembly, the apparatus including a first supply component, a second supply component and a third supply component. The first supply component is configured to provide a first electrode plate 11 to be wound. The second supply component is configured to provide a second electrode plate 12 to be wound. The third supply component is configured to provide a second electrode plate assembly 2 to be wound.

The first supply component is, for example, an existing positive electrode plate supply device. The second supply component is, for example, an existing positive electrode plate supply device. The third supply component is, for example, an existing second electrode plate assembly supply device. During supply, the first supply component first provides the first electrode plate 11, and the first electrode plate 11 is no longer supplied after the first electrode plate 11 are wound in several turns; and the second supply component is then used to provide the second electrode plate 12 until the required electrode assembly is formed.

In some other embodiments, in addition to the first electrode plate 11 and the second electrode plate 12, the electrode assembly further includes a third positive electrode plate 13. Correspondingly, the apparatus for manufacturing an electrode assembly further includes a fourth supply component. The fourth supply component may be, for example, an existing positive electrode plate supply device. The fourth supply component is configured to provide the third positive electrode plate 13. After the second electrode plate 12 provided by the second supply component reach a required number of turns, the second electrode plate 12 is no longer provided; and the fourth supply component provides the third positive electrode plate 13.

The above technical solutions implement the manufacture of the electrode assembly provided by the embodiments of the present application, and the obtained electrode assembly has the beneficial effects described above.

Referring to FIG. 6, the embodiments of the present invention further provides a method for manufacturing an electrode assembly, which is configured to manufacture the electrode assembly provided in each of the above embodiments. The method for manufacturing an electrode assembly includes the following steps.

In step S100, a first electrode plate 11 and a second electrode plate assembly 2 arranged in a stack are wound in a winding direction.

In step S200, a head portion of the second electrode plate 12 is disposed downstream of a tail portion of the first electrode plate 11.

In step S300, the second electrode plate 12 and a second electrode plate assembly 2 continue to be wound in the winding direction to obtain the electrode assembly.

The number of winding turns of the first electrode plate 11 is 1-10. Specifically, the number is, for example, 1, 2, 3, 4, 5, 6, 8, or may be 1.5, 3.5, etc. A separation distance a between the tail portion of the first electrode plate 11 and the head portion of the second electrode plate 12 is 0-50 mm, and is specifically, for example, 5 mm, 10 mm, 25 mm, 40 mm, or 50 mm.

The aforementioned numerical value range is used as the number of winding turns of the first electrode plate 11, so that the phenomenon of breakage at the corner of the inner turn of the first electrode plate assembly 1 is reduced or even eliminated, and the first electrode plate 11 also has a relatively high energy density. Considering the manufacturing process of the electrode assembly, the separation distance a between the tail portion of the first electrode plate 11 and the head portion of the second electrode plate 12 is set to be greater than 0. This will reduce the difficulty of machining and manufacturing. Moreover, since the tail portion of the first electrode plate 11 does not overlap with the head portion of the second electrode plate 12, the first electrode plate assembly 1 is not damaged due to the overlap between the two portions, no overlap indentations are generated, and thus the first electrode plate assembly 1, the second electrode plate assembly 2 and the separator 3 are protected. Furthermore, by using the aforementioned numerical value range, the energy density of the electrode assembly is almost not decreased, and it is ensured that the electrode assembly still has a relatively high energy density.

## Claims

1. An electrode assembly, comprising:
a first electrode plate assembly (1), comprising a first electrode plate (11) and a second electrode plate (12); the toughness of the first electrode plate (11) being greater than the toughness of the second electrode plate (12); the first electrode plate (11) being located upstream of the second electrode plate (12) in a winding direction; and a tail portion of the first electrode plate (11) being adjacent to a head portion of the second electrode plate (12); and
a second electrode plate assembly (2) wound together with the first electrode plate (11) and the second electrode plate (12) in the winding direction.

2. The electrode assembly according to claim 1, wherein the compacted density of the first electrode plate (11) is less than the compacted density of the second electrode plate (12).

3. The electrode assembly according to claim 2, wherein the ratio of the compacted density of the second electrode plate (12) to the compacted density of the first electrode plate (11) is greater than 1 and less than or equal to 3;
or
wherein the ratio of the compacted density of the second electrode plate (12) to the compacted density of the first electrode plate (11) is 1.009-1.152.

4. The electrode assembly according to any one of claims 1-3, wherein the area density of the first electrode plate (11) is less than the area density of the second electrode plate (12).

5. The electrode assembly according to any one of claims 1-4, wherein the thickness of an aluminum foil of the first electrode plate (11) is greater than or equal to the thickness of an aluminum foil of the second electrode plate (12);
preferably,
wherein the thickness of the aluminum foil of the first electrode plate (11) is 10-60 um, and/or the thickness of the aluminum foil of the second electrode plate (12) is 5-15 um.

6. The electrode assembly according to claim 5, wherein the thickness of the aluminum foil of the first electrode plate (11) is 13-15 um, and/or the thickness of the aluminum foil of the second electrode plate (12) is 8-13 um.

7. The electrode assembly according to any one of claims 1-6, wherein a slurry for the first electrode plate (11) comprises a softening agent;
and/or
wherein the number of winding turns of the first electrode plate (11) is 1-10.

8. The electrode assembly according to any one of claims 1-7, wherein a separation distance between the tail portion of the first electrode plate (11) and the head portion of the second electrode plate (12) is 0-50 mm;
preferably,
wherein the separation distance between the tail portion of the first electrode plate (11) and the head portion of the second electrode plate (12) is 3-10 mm.

9. The electrode assembly according to any one of claims 1-8, wherein a gap between the tail portion of the first electrode plate (11) and the head portion of the second electrode plate (12) is located in a bent region of the electrode assembly; and/or the gap between the tail portion of the first electrode plate (11) and the head portion of the second electrode plate (12) is located in a flat region of the electrode assembly.

10. The electrode assembly according to any one of claims 1-9, further comprising:
at least one third positive electrode plate (13), the third positive electrode plate (13) being located downstream of the second electrode plate (12) in the winding direction;
preferably,
wherein the toughness of the third positive electrode plate (13) is less than the toughness of the second electrode plate (12).

11. A battery cell, comprising an electrode assembly according to any one of claims 1-10.

12. A battery, comprising a battery cell according to claim 11.

13. A device using a battery, the device comprising a battery (100) according to claim 12.

14. A method for manufacturing an electrode assembly, the method comprising steps of:
winding, in a winding direction, a first electrode plate (11) and a second electrode plate assembly (2) that are arranged in a stack;
**characterized by**
disposing a head portion of a second electrode plate (12) downstream of a tail portion of the first electrode plate (11); and
continuing to wind the second electrode plate (12) and the second electrode plate assembly (2) in the winding direction to obtain the electrode assembly.

## Patentansprüche

1. Elektrodenbaugruppe, die Folgendes umfasst:
eine erste Elektrodenplattenbaugruppe (1), die eine erste Elektrodenplatte (11) und eine zweite Elektrodenplatte (12) umfasst; wobei die Zähigkeit der ersten Elektrodenplatte (11) größer als die Zähigkeit der zweiten Elektrodenplatte (12) ist; wobei die erste Elektrodenplatte (11) der zweiten Elektrodenplatte (12) in einer Wicklungsrichtung vorgelagert ist; und wobei ein Schwanzabschnitt der ersten Elektrodenplatte (11) an einen Kopfabschnitt der zweiten Elektrodenplatte (12) angrenzt; und
eine zweite Elektrodenplattenanordnung (2), die mit der ersten Elektrodenplatte (11) und der zweiten Elektrodenplatte (12) in der Wicklungsrichtung zusammengewickelt ist.

2. Elektrodenbaugruppe nach Anspruch 1, wobei die Verdichtungsdichte der ersten Elektrodenplatte (11) kleiner als die Verdichtungsdichte der zweiten Elektrodenplatte (12) ist.

3. Elektrodenbaugruppe nach Anspruch 2, wobei das Verhältnis der Verdichtungsdichte der zweiten Elektrodenplatte (12) zu der Verdichtungsdichte der ersten Elektrodenplatte (11) größer als 1 und kleiner oder gleich 3 ist;
oder
wobei das Verhältnis der Verdichtungsdichte der zweiten Elektrodenplatte (12) zu der Verdichtungsdichte der ersten Elektrodenplatte (11) 1,009-1,152 beträgt.

4. Elektrodenbaugruppe nach einem der Ansprüche 1-3, wobei die Flächendichte der ersten Elektrodenplatte (11) kleiner als die Flächendichte der zweiten Elektrodenplatte (12) ist.

5. Elektrodenbaugruppe nach einem der Ansprüche 1-4, wobei die Dicke einer Aluminiumfolie der ersten Elektrodenplatte (11) größer oder gleich der Dicke einer Aluminiumfolie der zweiten Elektrodenplatte (12) ist;
vorzugsweise
wobei die Dicke der Aluminiumfolie der ersten Elektrodenplatte (11) 10-60 um beträgt und/oder die Dicke der Aluminiumfolie der zweiten Elektrodenplatte (12) 5-15 um beträgt.

6. Elektrodenbaugruppe nach Anspruch 5, wobei die Dicke der Aluminiumfolie der ersten Elektrodenplatte (11) 13-15 um beträgt und/oder die Dicke der Aluminiumfolie der zweiten Elektrodenplatte (12) 8-13 um beträgt.

7. Elektrodenbaugruppe nach einem der Ansprüche 1-6, wobei eine Aufschlämmung für die erste Elektrodenplatte (11) einen Weichmacher umfasst;
und/oder
wobei die Anzahl von Wicklungswindungen der ersten Elektrodenplatte (11) 1-10 beträgt.

8. Elektrodenbaugruppe nach einem der Ansprüche 1-7, wobei ein Trennungsabstand zwischen dem Schwanzabschnitt der ersten Elektrodenplatte (11) und dem Kopfabschnitt der zweiten Elektrodenplatte (12) 0-50 mm beträgt;
vorzugsweise
wobei der Trennungsabstand zwischen dem Schwanzabschnitt der ersten Elektrodenplatte (11) und dem Kopfabschnitt der zweiten Elektrodenplatte (12) 3-10 mm beträgt.

9. Elektrodenbaugruppe nach einem der Ansprüche 1-8, wobei ein Zwischenraum zwischen dem Schwanzabschnitt der ersten Elektrodenplatte (11) und dem Kopfabschnitt der zweiten Elektrodenplatte (12) in einem gebogenen Bereich der Elektrodenbaugruppe liegt; und/oder der Zwischenraum zwischen dem Schwanzabschnitt der ersten Elektrodenplatte (11) und dem Kopfabschnitt der zweiten Elektrodenplatte (12) in einem flachen Bereich der Elektrodenanordnung liegt.

10. Elektrodenbaugruppe nach einem der Ansprüche 1-9, die ferner Folgendes umfasst:
mindestens eine dritte positive Elektrodenplatte (13), wobei die dritte positive Elektrodenplatte (13) der zweiten Elektrodenplatte (12) in der Wicklungsrichtung nachgelagert ist;
vorzugsweise
wobei die Zähigkeit der dritten positiven Elektrodenplatte (13) kleiner als die Zähigkeit der zweiten Elektrodenplatte (12) ist.

11. Batteriezelle, die eine Elektrodenbaugruppe nach einem der Ansprüche 1-10 umfasst.

12. Batterie, die eine Batteriezelle nach Anspruch 11 umfasst.

13. Vorrichtung, die eine Batterie verwendet, wobei die Vorrichtung eine Batterie (100) nach Anspruch 12 umfasst.

14. Verfahren zum Herstellen einer Elektrodenbaugruppe, wobei das Verfahren die folgenden Schritte umfasst:
Wickeln, in einer Wicklungsrichtung, einer ersten Elektrodenplatte (11) und einer zweiten Elektrodenplattenbaugruppe (2), die in einem Stapel angeordnet sind;
**gekennzeichnet durch**
Anordnen eines Kopfteils einer zweiten Elektrodenplatte (12) in nachgelagerter Position zu einem Schwanzteil der ersten Elektrodenplatte (11); und
Fortfahren mit dem Wickeln der zweiten Elektrodenplatte (12) und der zweiten Elektrodenplattenbaugruppe (2) in der Wicklungsrichtung, um die Elektrodenbaugruppe zu erhalten.

## Revendications

1. Ensemble électrode, comprenant :
un premier ensemble plaque d'électrode (1) comprenant une première plaque d'électrode (11) et une deuxième plaque d'électrode (12) ; la ténacité de la première plaque d'électrode (11) étant supérieure à la ténacité de la deuxième plaque d'électrode (12) ; la première plaque d'électrode (11) étant située en amont de la deuxième plaque d'électrode (12) dans une direction d'enroulement ; et une partie arrière de la première plaque d'électrode (11) étant adjacente à une partie avant de la deuxième plaque d'électrode (12) ; et
un deuxième ensemble plaque d'électrode (2) enroulé avec la première plaque d'électrode (11) et la deuxième plaque d'électrode (12) dans la direction d'enroulement.

2. Ensemble électrode selon la revendication 1, la densité compactée de la première plaque d'électrode (11) étant inférieure à la densité compactée de la deuxième plaque d'électrode (12).

3. Ensemble électrode selon la revendication 2, le rapport de la densité compactée de la deuxième plaque d'électrode (12) à la densité compactée de la première plaque d'électrode (11) étant supérieur à 1 et inférieur ou égal à 3 ;
ou
le rapport de la densité compactée de la deuxième plaque d'électrode (12) à la densité compactée de la première plaque d'électrode (11) étant de 1,009 à 1,152.

4. Ensemble électrode selon l'une quelconque des revendications 1 à 3, la densité de surface de la première plaque d'électrode (11) étant inférieure à la densité de surface de la deuxième plaque d'électrode (12).

5. Ensemble électrode selon l'une quelconque des revendications 1 à 4, l'épaisseur d'une feuille d'aluminium de la première plaque d'électrode (11) étant supérieure ou égale à l'épaisseur d'une feuille d'aluminium de la deuxième plaque d'électrode (12) ;
de préférence,
l'épaisseur de la feuille d'aluminium de la première plaque d'électrode (11) étant de 10-60 um et/ou l'épaisseur de la feuille d'aluminium de la deuxième plaque d'électrode (12) étant de 5-15 um.

6. Ensemble électrode selon la revendication 5, l'épaisseur de la feuille d'aluminium de la première plaque d'électrode (11) étant de 13-15 um, et/ou l'épaisseur de la feuille d'aluminium de la deuxième plaque d'électrode (12) étant de 8-13 um.

7. Ensemble électrode selon l'une quelconque des revendications 1 à 6, une suspension épaisse pour la première plaque d'électrode (11) comprenant un agent adoucissant ;
et/ou
le nombre de tours d'enroulement de la première plaque d'électrode (11) étant de 1 à 10.

8. Ensemble électrode selon l'une quelconque des revendications 1 à 7, une distance de séparation entre la partie arrière de la première plaque d'électrode (11) et la partie avant de la deuxième plaque d'électrode (12) étant de 0-50 mm ;
de préférence,
la distance de séparation entre la partie arrière de la première plaque d'électrode (11) et la partie avant de la deuxième plaque d'électrode (12) étant de 3-10 mm.

9. Ensemble électrode selon l'une quelconque des revendications 1 à 8, un espace entre la partie arrière de la première plaque d'électrode (11) et la partie avant de la deuxième plaque d'électrode (12) étant situé dans une région courbée de l'ensemble électrode ; et/ou l'espace entre la partie arrière de la première plaque d'électrode (11) et la partie avant de la deuxième plaque d'électrode (12) étant situé dans une région plate de l'ensemble électrode.

10. Ensemble électrode selon l'une quelconque des revendications 1 à 9, comprenant en outre :
au moins une troisième plaque d'électrode positive (13), la troisième plaque d'électrode positive (13) étant située en aval de la deuxième plaque d'électrode (12) dans la direction d'enroulement ;
de préférence,
la ténacité de la troisième plaque d'électrode positive (13) étant inférieure à la ténacité de la deuxième plaque d'électrode (12).

11. Cellule de batterie, comprenant un ensemble électrode selon l'une quelconque des revendications 1 à 10.

12. Batterie, comprenant une cellule de batterie selon la revendication 11.

13. Dispositif utilisant une batterie, le dispositif comprenant une batterie (100) selon la revendication 12.

14. Procédé de fabrication d'un ensemble électrode, le procédé comprenant les étapes de :
l'enroulement, selon une direction d'enroulement, d'une première plaque d'électrode (11) et d'un deuxième ensemble plaque d'électrode (2) agencés selon un empilement ;
**caractérisé en ce que**
la disposition d'une partie avant d'une deuxième plaque d'électrode (12) en aval d'une partie arrière de la première plaque d'électrode (11) ; et
l'enroulement continu de la deuxième plaque d'électrode (12) et du deuxième ensemble plaque d'électrode (2) dans la direction d'enroulement pour obtenir l'ensemble électrode.
